# EUROPÄISCHE PATENTANMELDUNG

(11) **EP 1 108 682 A2**
(43) Veröffentlichungstag der Anmeldung: **20.06.2001**
(21) Anmeldenummer: 00123818.7
(22) Anmeldetag: 02.11.2000
(51) Int. Cl.: C02F 1/42, B01D 24/00, C02F 5/00

(54) **Verfahren und Vorrichtung zur Behandlung von Flüssigkeiten**

(30) Priorität: 16.12.1999 DE 19960700
(71) Anmelder: Schwarting, Georg, 86152 Augsburg (DE)
(72) Erfinder: Schwarting, Georg, 86152 Augsburg (DE)
(74) Vertreter: Charrier, Rolf, Dipl.-Ing.

(57) **Zusammenfassung**

Die Erfindung betrifft ein Verfahren zum Behandeln von Flüssigkeiten, insbesondere von Wasser, bei dem von einer Hauptwasserleitung (3) Wasser einer Entnahmeleitung (11) zugeführt wird, das zwischen der Hauptwasserleitung (3) und der Entnahmeleitung (11) katalytisch behandelt wird. Bekannte derartige Verfahren führen zur Verkalkung von Wasserverbrauchern, insbesondere von Warmwasserverbrauchern.

Die Aufgabe, ein Verfahren so weiterzubilden, daß eine Verkalkung von Wasserverbrauchern weitgehend vermieden wird, wird dadurch gelöst, daß in einem ersten Betriebszustand Wasser ein erstes Katalysatorbett durchströmt und hierbei ein Schwebebett von Granulatteilchen erzeugt wird, danach das Wasser ein zweites Katalysatorbett durchströmt und hierbei die Granulatteilchen unter Bildung möglichst kleiner Zwischenräume verdichtet werden und sodann das Wasser zur Bildung eines Wasserkreislaufs zurück zum ersten Katalysatorbett geleitet wird, und daß in einem zweiten Betriebszustand, in welchem eine Wasserentnahme aus der Entnahmeleitung (11) stattfindet, das Wasser aus der Hauptwasserleitung (3) das zweite Katalysatorbett durchströmt und hierbei ein Schwebebett von Granulatteilchen dieses zweiten Katalysatorbetts erzeugt wird und das Wasser nach Durchströmen des zweiten Katalysatorbetts in die Entnahmeleitung (11) gelangt.

## Beschreibung

Die Erfindung betrifft ein Verfahren und eine Vorrichtung zur Behandlung von Flüssigkeiten insbesondere von Wasser.

Es sind Vorrichtungen aus dem Bereich der chemischen Wasserbehandlung bekannt. Hierbei wird eine im wesentlichen zylindrisch-becherförmige und vertikal angeordnete Kartusche, in der sich ein Behandlungsmittel befindet, von Wasser durchströmt. Die Kartusche ist derart in eine Wasserleitung, z.B. in die Zuleitung eines Hauses, eingebunden, daß das gesamte, dem Haus zugeführte Wasser das Behandlungsmittel durchströmen muß. Dies wird beispielsweise dadurch erreicht, daß die Wasserzuführung in ein zentral in der Kartusche angeordnetes Rohr mündet, welches sich durch den Deckel der Kartusche bis kurz vor deren Bodenbereich erstreckt, während im Deckelbereich eine weitere Öffnung vorgesehen ist, an die das Ablaufrohr, welches schließlich zur Wasserversorgung des Hauses führt, angeschlossen ist. Das durch das Zulaufrohr in den Bodenbereich der Kartusche gebrachte Wasser durchläuft das in der Kartusche befindliche Behandlungsmittel und verläßt die Kartusche über das am Deckel angeschlossene Ablaufrohr.

Derartige Wasserbehandlungsvorrichtungen arbeiten mit chemischen Stoffen, in erster Linie mit Aktivkohle, die verbraucht werden und daher regelmäßig nachgefüllt werden müssen. Sie eignen sich nicht für neuartige Wasserbehandlungsmaterialien, insbesondere katalytisch arbeitende Ionenaustauschermaterialien, da diese aufgrund ihrer geringen Dichte in kürzester Zeit aus der Kartusche ausgeschwemmt würden bzw. einen am Auslaß der Kartusche angeordneten Filter verstopfen würden. Zum Entkarbonisieren dient in erster Linie Kalkmilch, wie in der DE 196 06 633 Al beschrieben.

Aus der DE-OS 39 00 754 ist eine Vorrichtung zur Wasserbehandlung bekannt, bestehend aus einem Behälter, der unten mit einem Ionenaustauschermaterial gefüllt ist. Oberhalb dieses Ionenaustauschermaterials befindet sich eine Granulatschicht aus vorgeschäumtem Polysterol mit einem Teilchendurchmesser von 1 - 2 mm und einem spezifischen Gewicht von 0,03 g/cm³. Wasser, das den Behälter durchströmt, wird hierbei katalytisch behandelt Die Granulatschicht hat die Wirkung eines Filters und bewirkt, daß vom Wasser mitgeführtes Ionenaustauschermaterial aus dem Behälter nicht austritt.

Ionenaustauschermaterial mit katalytisch wirkenden funktionellen Gruppen sind beispielsweise in der WO 99/48822 beschrieben.

In der oben genannten Druckschrift werden katalytisch arbeitende Ionenaustauschermaterialien beschrieben. Für diese hat sich in der Fachwelt der Begriff "Katalysator" oder "Katalysatorbett" durchgesetzt. Unter diesem Begriff, der in der vorliegenden Anmeldung verwendet wird, sind daher die in der genannten Druckschrift im einzelnen beschriebenen katalytisch arbeitenden Ionenaustauschermaterialien zu verstehen. Alternative Begriffe, welche die gleiche Bedeutung haben, sind "Katalysatorgranulat" und "Granulatbett".

Es besteht die Aufgabe, ein Verfahren bereitzustellen, das eine Verkalkung von Wasserverbrauchern insbesondere Warmwasserverbrauchern weitgehend verhindert.

Gelöst wird diese Aufgabe mit den Merkmalen des Anspruches 1. Vorteilhafte Ausgestaltungen des Verfahrens und eine Vorrichtung zur Durchführung des Verfahrens sind Gegenstand der Unteransprüche.

Wasser durchströmt ein Katalysatorgranulat, d.h. ein Ionenaustauschermaterial, wie z.B. in der WO 99/48822 beschrieben, welches aufgrund seiner katalytischen Oberflächen die Ausfällung von in Wasser gelösten Mineralien - vorrangig Kalk - in kristalliner Form herbeiführt. Diese Calcitkristalle beispielsweise haben die Eigenschaft, nicht an metallischen Oberflächen anzuwachsen, wenn sie ihr Endwachstum von ca. 20 µmm erreicht haben. Sie stellen mit ihrer eigenen Oberflächenmatrix ein Impfkristall dar. Bei Vorhandensein von Impfkristallen in möglichst hoher Konzentration kommt es zur Bildung von Kalkkristallen in Form der Kristalle, die als Impfkristalle im Wasser schon vorhanden sind. Diese Kalkkristalle haften an Kontaktmedien nicht an.

Bei Erwärmung des Wassers entsteht eine zunehmende Übersättigung und eine daraus folgende Ausfällung von z. B. gelöstem Kalk in kristalliner Form, bis das Wasser wieder ein neues stabiles Kalk/Kohlensäuregleichgewicht erreicht hat. Wenn in dieser Phase eine möglichst hohe Anzahl von Impfkristallen wie oben beschrieben bereits durch die Kaltwasserzuführung vorhanden ist, bilden sich die neuen Kristalle auch in Form der gewollten Calcitkristalle, die vorher im kalten Wasser auf den katalytischen Oberflächen gezielt gebildet wurden.

Die im folgenden beschriebene Anordnung und der beschriebene Betrieb stellt eine möglichst hohe Konzentration von Impfkristallen sicher, die auf katalytischen Oberflächen gebildet worden sind und im Kaltwasser zur Verfügung stehen. Wenn durch Verbrauch von erwärmtem Trinkwasser aus Warmwasserspeichern wie auch Durchlauferhitzern kaltes Wasser in die Erwärmungsanlagen nachfließt und durch die Erwärmung in die Übersättigung gebracht wird mit der Folge der oben beschriebenen kristallinen Kalkausfällung, stellt die Vorrichtung sicher, daß in dem zugeführten Kaltwasser eine ausreichend hohe Konzentration von Impfkristallen mitgeführt wird.

Eine Vorrichtung zur Durchführung des Verfahrens wird nachfolgend beschrieben:

Die Vorrichtung weist einen ersten Tank 1 und einen zweiten Tank 2 auf. Frischwasser wird über die Hauptwasserleitung 3 und einem Rückschlagventil 14 einem T-Stück 8 zugeführt. Mit dem T-Stück ist eine Leitung 4 verbunden, welche zum Tank 1 führt. Mit dem T-Stück ist weiterhin eine Leitung 5 verbunden, die über eine Pumpe 6 zum Tank 2 führt. In den Tanks 1, 2 ist jeweils ein vertikales Rohr 12 vorgesehen, das an der Tankunterseite in einem Bett aus Katalysatorgranulat 13 mündet. Hierbei handelt es sich bevorzugt um ein Ionenaustauschermaterial nach der WO 99/48822. Im oberen Bereich der Tanks 1, 2 befindet sich eine Granulatschicht 15 bevorzugt der in der DE-OS 39 00 754 genannten Art. Diese Granulatschicht 15 umgibt jeweils einen Tankauslaß 16. Der Tankauslaß 16 des Tanks 1 ist angeschlossen an eine Leitung 10, die zu einem weiteren T-Stück 9 führt. Der Tankauslaß 16 des Tanks 2 ist angeschlossen an eine Leitung 7, die ebenfalls zum T-Stück 9 führt. Vom T-Stück 9 ist eine Leitung 11 angeschlossen, welche zu Wasserverbrauchern führt.

Mit der Vorrichtung sind zwei Betriebszustände möglich, wobei im ersten Betriebszustand über die Leitung 11 kein Wasser entnommen wird, während beim zweiten Betriebszustand an die Leitung 11 angeschlossene Verbraucher Wasser entnehmen.

Erfolgt über die Leitung 11 keine Wasserentnahme, dann fördert die Pumpe 6 Wasser zum Rohr 12 des Tanks 2. Im Tank 2 wird durch das strömende Wasser das dortige Katalysatorgranulat 13 in Schwebe gehalten. Über die Granulatschicht 15 des Tanks 2 strömt das Wasser über den Auslaß 16 in die Leitung 7 und über das T-Stück 9 in die Leitung 10, von wo es dann über den Auslaß 16 in den Tank 1 gelangt. Das Wasser durchströmt den Tank 1 von oben nach unten und hierbei durch das Katalysatorgranulat 13 des Tanks 1. Über das Rohr 12 strömt es durch die Leitungen 4 und 5 und über die Pumpe 6 zurück zum Tank 2.

Da zwischen den Leitungen 7, 10, 11 Druckausgleich herrscht, strömt kein Wasser in die Leitung 11. Das Rückschlagventil 14 verhindert einen Wassereintritt in die Leitung 3.

Beim Durchströmen des Katalysatorgranulats des Tanks 2 bilden sich auf dessen Oberfläche Impfkristalle, wobei die Impfkristallbildung durch das Schweben des Granulats im Wasser begünstigt wird. Das Impfkristalle führende Wasser gelangt vom Tank 2 in den Tank 1. Hierbei strömen die gelösten Kalkmoleküle nunmehr über die katalytische Oberfläche des Katalysatorbetts 13 des Tanks 1, wobei sich dort teilweise neue Impfkristalle bilden. Da das Granulatbett 13 im Tank 1 in diesem Betriebszustand von oben nach unten durchströmt wird, hat es neben der katalytischen Funktion auch eine Filterfunktion, da das Granulatbett 13 mit den geringen Zwischenräumen und seiner Oberflächenmatrix die gebildeten Impfkristalle in starkem Maße zurück hält. Nach mehrmaligem Durchströmen im Kreislauf wird das Granulatbett 13 des Tanks 1 bezüglich seiner Rückhaltefunktion aufgrund der verkeilten Impfkristalle immer intensiver und bildet so in kurzer Zeit ein Depot von ausgewachsenen Impfkristallen. Neben der Depotwirkung tritt eine weitere Wirkung auf: Die im Granulat 13 des Tanks 1 festgehaltenen Impfkristalle sorgen mit ihrer Außenflächenmatrix für zusätzliche katalytische Oberflächen, wodurch die kristalline Ausfällung mittels Oberflächeneffekten zusätzlich intensiviert wird.

Wird von einem Verbraucher Wasser über die Leitung 11 entnommen, dann strömt von der Hauptwasserleitung 3 Wasser über die Leitung 4 zum Tank 1. Im Tank 1 wird das Wasser über das Rohr 12 nach unten geführt und steigt dann außerhalb des Rohres 12 durch das Katalysatorbett 13 und die Granulatschicht 15 nach oben, wo es am Auslaß 16 austritt und über die Leitung 10 in die Leitung 11 gelangt.

Das Wasser durchströmt im Tank 1 das Katalysatorgranulat 13 von unten nach oben, wodurch anstelle eines gedrückten Filterbetts wie im vorbeschriebenen Zustand nunmehr ein Schwebebett entsteht. Durch den Schwebebetrieb werden die Granulatteilchen voneinander getrennt und geben die engen, mit Impfkristallen gefüllten Zwischenräume frei.

Die Schwer- und Transportkräfte des fließenden Wassers tragen jetzt die zuvor deponierten und die neu im Katalysatorbett 13 des Tanks 1 gewachsenen Impfkristalle mit und fördern sie in verdichteter Menge zu der Wasserentnahmestelle, welche an die Leitung 11 angeschlossen ist. Handelt es sich bei dem Verbraucher um ein Warm- oder Heißwassergerät, dann tritt dort zum Zeitpunkt der Kalkausfällung eine hohe Konzentration von Impfkristallen des Typs Calcit auf. Wenn die Kristalle ausgewachsen sind, ist deren Anhaften an Geräte- und Leitungswänden verhindert und damit eine Verkalkung, d.h. Kalkablagerung unterbunden.

Bei diesem Betriebszustand kann die Pumpe 6 weiterhin Wasser durch den Tank 2 fördern, wodurch durch den Schwebebetrieb des Katalysatorbetts 13 im Tank 2 zusätzlich Impfkristalle erzeugt werden, wie dies auch durch den Schwebebetrieb im Katalysatorbett 13 des Tanks 1 der Fall ist. In jedem Fall ist sichergestellt, daß zum Zeitpunkt der Kalkausfällung in den Geräten eine hohe Konzentration von Impfkristallen vorhanden ist, die eine Bildung von Kristallen bewirken, die an Leitungswänden nicht anhaften.

Es ist noch anzumerken, daß die Tanks 1, 2 im wesentlichen identisch ausgebildet sind. Anstelle der in der Leitung 5 angeordneten Pumpe 6, die in Richtung des Rohres 12 des Tanks 2 fördert, ist es auch möglich, eine solche Pumpe 6 in der Leitung 7 anzuordnen, die zum T-Stück 9 führt. Diese Pumpe fördert dann von der Austrittsöffnung 16 des Tanks 2 in Richtung des T-Stücks 9.

Anstelle der Wasserbehandlung können auch andere Flüssigkeiten behandelt werden, z. B. ist es möglich Mineralöl vom Schwefel zu befreien.

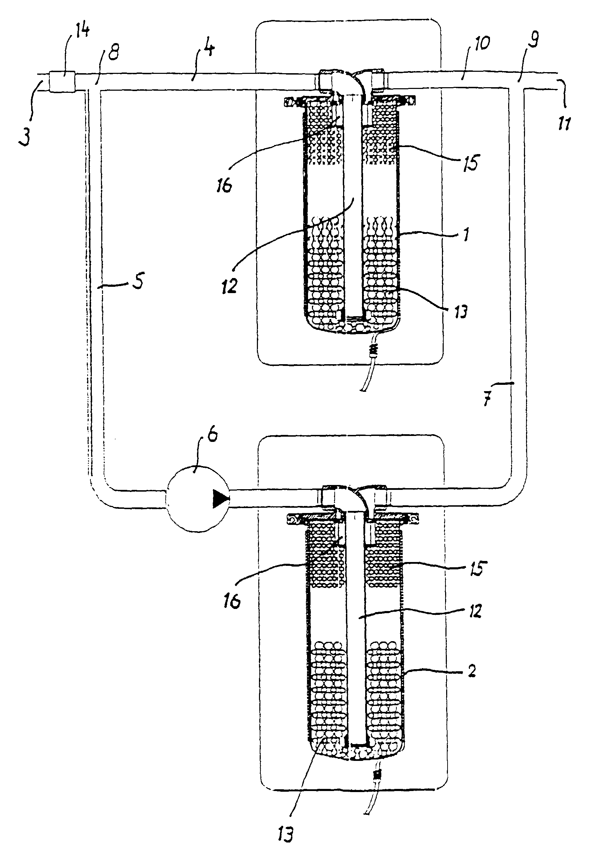

## Patentansprüche

1. Verfahren zum Behandeln von Flüssigkeiten, insbesondere von Wasser, bei dem von einer Hauptwasserleitung (3) Wasser einer Entnahmeleitung (11) zugeführt wird, das zwischen der Hauptwasserleitung (3) und der Entnahmeleitung (11) katalytisch behandelt wird, **dadurch gekennzeichnet**, daß in einem ersten Betriebszustand Wasser ein erstes Katalysatorbett durchströmt und hierbei ein Schwebebett von Granulatteilchen erzeugt wird, danach das Wasser ein zweites Katalysatorbett durchströmt und hierbei die Granulatteilchen unter Bildung möglichst kleiner Zwischenräume verdichtet werden und sodann das Wasser zur Bildung eines Wasserkreislaufs zurück zum ersten Katalysatorbett geleitet wird, und daß in einem zweiten Betriebszustand, in welchem eine Wasserentnahme aus der Entnahmeleitung (11) stattfindet, das Wasser aus der Hauptwasserleitung (3) das zweite Katalysatorbett durchströmt und hierbei ein Schwebebett von Granulatteilchen dieses zweiten Katalysatorbetts erzeugt wird und das Wasser nach Durchströmen des zweiten Katalysatorbetts in die Entnahmeleitung (11) gelangt.

2. Verfahren nach Anspruch 1, **dadurch gekennzeichnet**, daß im zweiten Betriebszustand das erste Katalysatorbett weiterhin zur dortigen Bildung eines Schwebebetts von Wasser durchströmt wird, das von dort der Entnahmeleitung (11) zugeführt wird.

3. Verfahren nach Anspruch 1 oder 2, **dadurch gekennzeichnet**, daß das erste Katalysatorbett von unten nach oben durchströmt wird.

4. Verfahren nach einem der Ansprüche 1 bis 3, **dadurch gekennzeichnet**, daß das zweite Katalysatorbett im ersten Betriebszustand von oben nach unten und im zweiten Betriebszustand von unten nach oben durchströmt wird.

5. Verfahren nach einem der Ansprüche 1 bis 4, **dadurch gekennzeichnet**, daß das Wasser nach dem Durchströmen des ersten Katalysatorbetts eine Filtergranulatschicht durchströmt.

6. Verfahren nach einem der Ansprüche 1 bis 5, **dadurch gekennzeichnet**, daß im zweiten Betriebszustand das Wasser nach dem Durchströmen des zweiten Katalysatorbetts eine Filtergranulatschicht durchströmt.

7. Vorrichtung zur Durchführung des Verfahrens nach einem der Ansprüche 1 bis 6, **dadurch gekennzeichnet**, daß zwei Tanks (1, 2) vorgesehen sind, die jeweils mit einem Katalysatorbett (13) gefüllt sind, in welches sich ein vertikales Rohr (12) erstreckt, beide Rohre (12) über Leitungen (4, 5) mit der Hauptwasserleitung (3) verbunden sind, die oberseitig angeordneten Austrittsöffnungen (16) jedes Tanks (1, 2) über weitere Leitungen (7, 10) mit der Entnahmeleitung (11) verbunden sind und in der zum Tank (2) führenden Leitung (5) eine Förderpumpe (6) zwischengeschaltet ist, die in Richtung des Rohrs (12) dieses Tanks (2) fördert.
